# EUROPEAN PATENT SPECIFICATION

(11) **EP 1 393 632 B1**
(45) Date of publication and mention of the grant of the patent: **07.03.2007**
(21) Application number: 03025947.7
(22) Date of filing: 26.01.2000
(51) Int. Cl.: A22C 11/02

(54) **Method and means for filling natural casing sausages**
Methode und Vorrichtung zum Füllen von natürlichen Wurstdärmen
Procédé et dispositif pour le remplissage d'enveloppes naturelles pour saucisses

(30) Priority: 05.04.1999 US 127770 P
(43) Date of publication of application: 03.03.2004
(62) Divisional of application: 00903418.2
(73) Proprietor: Stork Townsend Inc., Des Moines IA 50317 (US)
(72) Inventor: Cate, Stephen H., Iowa 50317 (US); Ottow, Marcellinus Franciscus, Iowa 50317 (US); Hergott, Steven P., Iowa 50317 (US); Basile, Vincent L., II, Iowa 50317 (US); Simpson, Michael S., Iowa 50317 (US); Hamblin, David S., Iowa 50317 (US); Lebsack, Ken L., Iowa 50317 (US); Enklaar, Rudolph P. T., Iowa 50317 (US); Thomas, Jay D., Iowa 50317 (US)
(74) Representative: Thomson, Paul Anthony

(56) References cited:
- US-A- 3 150 410
- US-A- 3 672 001
- US-A- 3 952 370
- US-A- 5 813 907
- US-A- 5 830 050

## Description

### BACKGROUND OF THE INVENTION

Sausages have been traditionally made by filling the natural intestines of sheep, for example, with the sausage meat product whereupon the filled natural casing was formed into links for cooking by the consumer. In more modern times, sausages are predominantly made by introducing a meat emulsion into an artificial casing which encased the sausage material through linking and preliminary cooking whereupon the casings are peeled from the sausage before being sold to the consumer. Machines for making sausages with artificial casings have a high volume capability (up to 30,000 sausages per hour). US-3 672 001 discloses such a machine in which artificial casings are provided by means of a hopper. Efforts have been made to use these high speed machines with natural casings. However, because of the nature of the natural casings including their relatively shorter length and nonuniform diameter, modern sausage encasing machines have not achieved the volume and capacity with natural casings as they do with artificial casings.

It is therefore a principal object of this invention to provide a method and machine for filling natural casings which is economical, relatively fast, and easy to accomplish as compared to previous ways of filling natural casings.

A still further object of this invention is to provide a method and a machine for filling natural casings wherein the meat pressure expands the natural casing and pushes the casing forward as the meat emulsion discharges from a conventional hollow stuffing horn.

A further object of this invention is to provide a machine and method for filling a natural casing wherein the filled casing passes through a hollow chuck with a resilient brake therein which impedes the movement of the casing from the stuffer tube and wherein the resilient brake creates a balance between the meat pushing forward on the casing and the brake holding back on the casing, all to create the desired fill or plumpness of the resulting sausage.

A still further object of this invention is to provide a flexible or resilient brake in a hollow chuck through which the filled casing moves in a rotatable twisting head which not only produces a longitudinal drag on the casing to resist forward motion thereof, but also provides a radial rotating course which helps to rotate the casing and thereupon facilitate twisting thereof as the filled sausage casing moves through the linking chains.

A still further object of this invention is to provide a follower or thrust collar on the stuffing tube upstream of the natural casing which is manually and intermittently pushed against the back side of the natural casing which provides a light force to prevent the natural casing from sticking to the tube but does not serve to move the natural casing from the tube, for this is accomplished by the momentum of the meat emulsion filling the casing. This force is insufficient to cause squeezing pressure between the follower and the twisting head.

A still further object of this invention is to provide a method and machine which will permit easy conversion of the machine from the natural casing operation to the artificial casing operation.

A still further object of the invention is to provide a casing clamp and casing hopper on a sausage making machine which can be moved away from the casing filling station at times to accommodate the natural casing mode for the machine.

A still further object of the invention is to provide a method and apparatus for filling a natural casing which has the ability to change the stuffing tube from a full stroke as with artificial casings to a partial stroke for use with natural casings.

A still further object of the invention is to provide a method and machine for filling natural casings which has a thrust collar that can be manually controlled by the operator, or an automatic follower which will duplicate the manual operation by providing a series of intermittent push and release actions to move the unshirred casing forward.

A still further object of the invention is to provide a method and machine to fill natural casings wherein water is present at various stages of the operation to keep the natural casing from becoming dehydrated and to maintain its very soft, pliable and slippery character.

A still further object of the invention is to provide a method and machine for filling natural casings which utilizes a cooling turban as a part of the rotating twister.

These and other objects will be apparent to those skilled in the art.

### SUMMARY OF THE INVENTION

A method for enabling selective filling of an artificial casing or a natural hollow elongate casing with a meat emulsion in a machine for filling said emulsion into casings comprises either supplying artificial casings from a hopper or placing a natural casing on an elongated meat emulsion stuffing tube having a meat emulsion discharge end, closing an extended end of the natural casing over the discharge end of the stuffing tube so that meat emulsion exiting the discharge end will push the natural casing longitudinally by pumping meat emulsion through the stuffing tube for expansive discharge into the natural casing at a sufficient volume and velocity to provide the primary energy within the natural casing to move the natural casing forwardly off of the discharge end of the stuffing tube. The casing is extended through a hollow chuck. A resilient brake element in the chuck is extended around the casing to impede its longitudinal movement. A thrust collar is slidably mounted on the stuffing tube and is intermittently manually pushed against the casing to limit the length there of but is insufficient to create compression pressure thereon.

An apparatus for filling meat emulsion into an elongated natural or artificial casing has (a) a casing filling station including a stuffing tube for supporting a casing to be filled with meat emulsion, (b) a casing hopper to serve as a reservoir for a plurality of shirred artificial casings mounted on the machine adjacent the casing filling station for delivery of shirred artificial casings for mounting on the stuffing tube, and (c) means on the machine for rotating the casing hopper away from the casing filling station about a vertical axis.

### BRIEF DESCRIPTION OF THE DRAWINGS

Fig. 1 is a perspective view of a prior art sausage encasing machine which shows the general relationship of the major components of the sausage making machine of this invention;
Fig. 2 is an enlarged scale perspective view of the prior art machine of Fig. 1 taken on line 2-2 of Fig. 1;
Figs. 2A and 2B show the casing hopper of Fig. 2 in forward and rearward positions, respectively ;
Fig. 3 is an enlarged scale perspective view of the machine of Fig. 2 using conventional shirred casings ;
Figs. 3A and 3B are enlarged scale perspective views of the conventional components of a sausage encasing machine after the natural casing is placed on the stuffing horn;
Fig. 4 is an enlarged scale sectional view of the chuck; and
Fig. 5 is a view similar to Fig. 5 during the casing filling process.

### DESCRIPTION OF THE PREFERRED EMBODIMENT

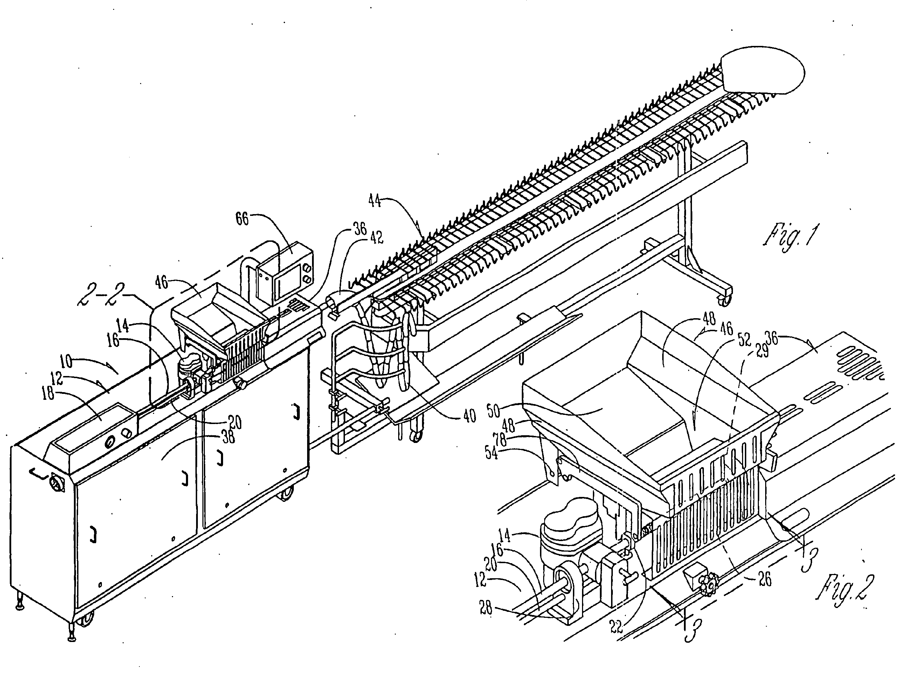

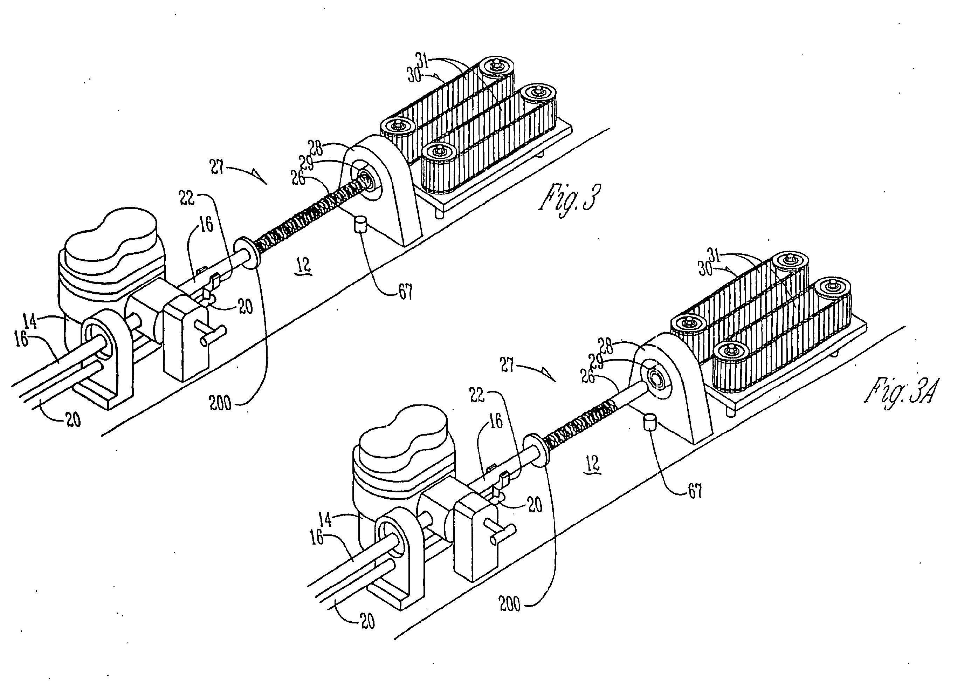

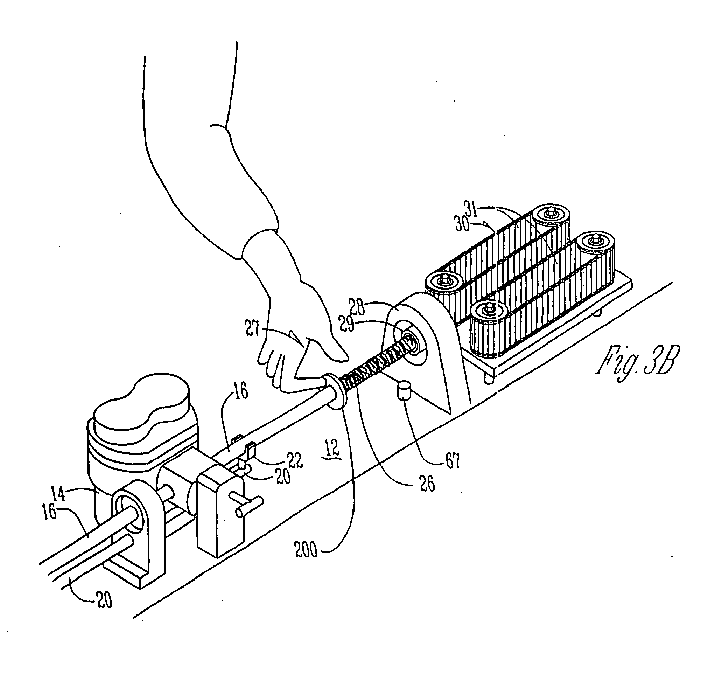

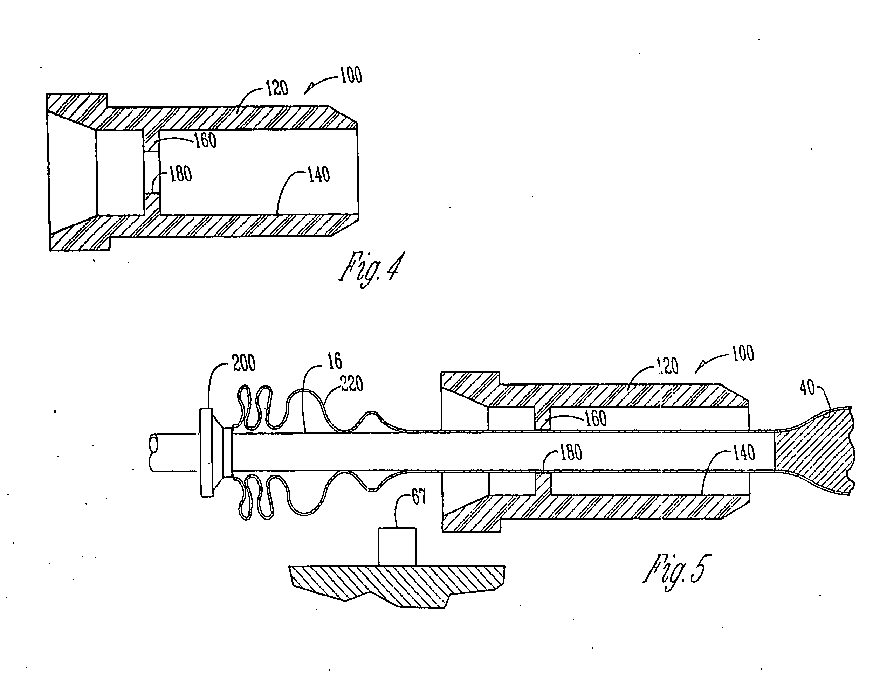

A sausage encasing machine 10 (Fig. 1) has a frame 12, and a conventional meat emulsion pump 14 connected to a source of meat emulsion. A stuffing horn 16 is slidably and operably connected to the pump 14 and is longitudinally moveable by air piston 17 contained in housing 18 (Fig. 1). A follower rod 20 is also slidably mounted on the pump 14 parallel to horn 16 and has an actuator 22 on one end slidably mounted on horn 16. Follower rod 20 is powered by air piston 24 located in housing 18. An elongated shirred sausage casing 26 is convention-ally mounted on horn 16. The forward end of horn 16 conventionally terminates at casing filling station 27 (Fig. 3) adjacent twister housing 28 which has a hollow rotatable chuck 29 which receives a meat filled casing 26 and rotates it before the meat filled casing moves into conventional linker 30. (Fig. 4, 5). The chains 31 of linker 30 are rotated by a motor 34 through suitable shafts, gears or belts. The conventional chuck 120 (Figs. 4, 5) in housing 28 is rotated by a motor (not shown) through suitable shafts and gears. Linker 30 is positioned within housing 36 (Fig. 1). The foregoing components are all conventional and are well known in the art, (see U.S. Patent No. 3,115,668) and are controlled by computer control 38 (Fig. 1).

The completed strand of sausages 40 exits the machine 10 through horn 42 and the strand is deposited on the chain of hooks of conventional conveyor 44 (Fig. 1).

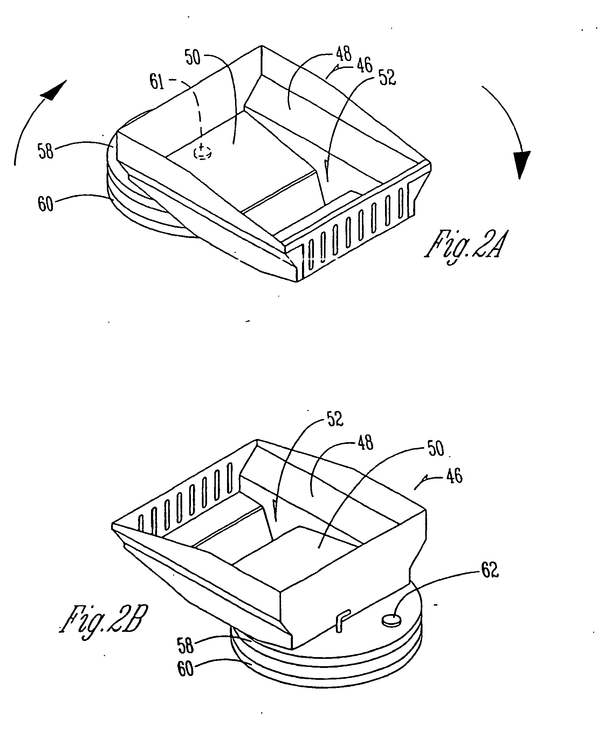

A casing hopper 46 has tapered sidewalls 48 and a sloping bottom 50 (Fig. 2) which cause shirred casings 26 therein to migrate downwardly towards a bottom opening 52. Hopper 46 is pivoted at 54 (Fig. 2) to any convenient side supports 56. It is also mounted on plate 58 which is pivotally mounted on plate 60 on a vertical axis of pin 61 to be rotated from the forward aperture position of Fig. 2A for filling shirred casings to an inoperative rearward position of Fig. 2B when not in use. A removable lock pin 62 extends between plates 58 and 60 to selectively lock hopper 46 in a forward or rearward position. A PLC 66 is mounted on machine 10 to program and coordinate the components of the machine. The PLC will control the pump 14, the rotation and longitudinal movement of horn 16, the position of hopper 46, and the operation of chuck 120, linker 30 and conveyor 44. A sensor or stop 67 (Figs. 3-5) adjacent the twister 28 will cause the functions at the filling station 27 to cease when the casing 220 is filled.

A rotatable chuck 100 (Figs. 5 and 6) has a cylindrical body portion 120 with a longitudinal center bore 140. A resilient brake element 160 is deposed within the center portion of bore 140. The brake 160 has a center bore 180 through which the stuffing horn 16 extends with a natural casing 220 thereon. The brake 160 provides a longitudinal drag on the natural casing as described heretofore. The location of the brake 160 in the chuck 100 can vary from one end to the other. It can be integral with the cylindrical housing 120, or can be of a separate material that is affixed in any convenient manner to the interior center bore of the chuck. The friction applied to the natural casing by the brake 160 merely impedes the free flow of the natural casing from the surface of the stuffing tube, but is insufficient to prevent the movement of the natural casing from the stuffing tube provided by the energy of the meat emulsion discharged from the stuffing tube into the interior of the natural casing.

When it is desired to change the machine 10 from filling conventional shirred casings to the filling of natural casings, the lock pin 62 is released and the hopper 46 is rotated about pin 61 from the forward position of Fig. 2B to the inoperative position of Fig. 2A so that it is out of the way for the process of filling natural casings. The thrust collar 200 is slidably mounted on the stuffing tube 16 (Figs. 3 and 4) behind the natural casing 220. The collar 200 is intermittently manually or automatically pushed against the casing insufficiently to create squeezing or compression pressure thereon but to facilitate the normal forward movement of the casing on the stuffing tube beyond the normal movement of the casing caused by the energy of the emulsion entering the casing. The longitudinal displacement of tube 16 is typically shortened by the PLC 66 when natural casings are being filled. The hopper 46 can be mechanically lifted, hinged, or moved by sliding to move out of the way to facilitate the process for filling the natural casings.

It is therefore seen that this machine will achieve at least all of its stated objectives.

## Claims

1. A method for enabling selective filling of an artificial casing or a natural hollow elongated casing with a meat emulsion in a machine for filling said emulsion into casings, comprising either supplying artificial casings (220) from a hopper (46) acting as a reservoir for artificial casings (220) adjacent a casing filling station or placing a natural casing (220) on an elongated meat emulsion stuffing tube (16) having a meat emulsion discharge end, closing an extended end of the natural casing over the discharge end of the stuffing tube so that meat emulsion exiting the discharge end will push the natural casing (220) longitudinally by pumping meat emulsion through the stuffing tube (16) for expansive discharge into the natural casing at a sufficient volume and velocity to provide the primary energy within the natural casing to move the natural casing forwardly off of the discharge end of the stuffing tube, providing a casing filling station (27) including the stuffing tube for supporting the casing to be filled with meat emulsion, providing a casing hopper (46) adjacent the casing filling station to serve as a reservoir for a plurality of shirred artificial casings for delivery of shirred artificial casings for mounting on the stuffing tube (16), and moving the casing hopper away from its position adjacent the casing filling station when natural casings are placed on a stuffing tube in the casing filling station.

2. The method of claim 1 wherein water is applied to the natural casing (220) before placing the casing on the stuffing tube (16) to make the casing hydrated, soft, pliable and slippery to prevent adhesion of the casing to the stuffing tube.

3. The method of claim 1 or 2 wherein the forward end of the stuffing tube extends through a hollow chuck (100), placing a resilient brake (160) element in the chuck around the stuffing tube to yieldingly engage the natural casing to impede the longitudinal movement of the natural casing on the stuffing tube (16).

4. The method of any one of claim 1 to 3 wherein a rotatable linking assembly (30) is located downstream of the discharge end of the stuffing tube (16) to link the natural casing filled with meat emulsion and to impede the longitudinal movement of natural casing from the stuffing tube.

5. The method of any one of claims 1 to 4 wherein a meat pump is employed to pump meat emulsion through a stuffing tube (16), wherein the forward end of the stuffing tube extends through a hollow chuck (100), placing a resilient brake element (160) in the chuck around the stuffing tube to yieldingly engage the natural casing to impede the longitudinal movement of the natural casing on the stuffing tube, wherein a rotatable linking assembly (30) is located downstream of the discharge end of the stuffing tube to link the natural casing filled with the meat emulsion and to impede the longitudinal movement of natural casing from the stuffing tube.

6. The method of any one of claims 1 to 5 wherein a PLC is provided and senses when the casing hopper is in its position adjacent the casing filling station (27) to thereupon control the longitudinal movement of the stuffing tube (16), to maintain the stuffing tube in a non-automatic extension mode, to hold a follower (20) connected to the stuffing tube in a retracted position, and to maintain the casing hopper in its position adjacent the casing filling station.

7. The method of claim 6 wherein a natural casing is placed on the stuffing tube (16) with the stuffing tube being in a partially retracted position to locate a discharge end of the stuffing tube upstream of the casing filing station (27); actuating the PLC (66) to cause the stuffing tube to extend through a chuck (29), and to cause a meat pump (14) to start pumping meat through the stuffing tube when the position of the stuffing tube through the chuck is sensed, and to start the rotation of the chuck and the stuffing tube (16), and to start the operation of linking chains (31) and a conveyor located downstream from the casing filling station (27); manually advancing the follower (20) and sensing its arrival at a position adjacent a twister mechanism containing the chuck, and causing the PLC (66) to stop the operation of the casing filling station.

8. A machine (10) for filling meat emulsion into elongated natural or artificial casings, comprising, a casing filling station (27) including a stuffing tube (16) for supporting a casing to be filled with meat emulsion, a casing hopper (46) to serve as a reservoir for a plurality of shirred artificial casings (220) mounted on the machine adjacent the casing filling station for delivery of the shirred artificial casings for mounting on the stuffing tube, and means on the machine for rotating the casing hopper away from the casing filling station about a vertical axis so as to permit the filling of a natural casing (220) on the stuffing tube (16).

9. The machine of claim 8 wherein the means for moving the casing hopper (46) includes means for raising the casing hopper, pivoting the casing hopper, and thence lowering the casing hopper for moving the casing hopper away from the casing filling station.

10. The machine of claim 8 of 9, wherein the stuffing tube (16) is longitudinally movably mounted on the machine, and means is associated with the stuffing tube to permit adjustment of its longitudinal movement.

11. The machine of any one of claims 8 to 10, wherein the adjustment of the longitudinal movement of the stuffing tube is comprised of a removable hard stop, or a sensor actuated pneumatic control means.

12. The machine of any one of claims 8 to 11, wherein at least one sensor is located in the machine to detect when the casing hopper is in its position adjacent the casing filling station (27); the sensor being operatively connected to a PLC (66) to control longitudinal movement of the stuffing tube (16) and to maintain the stuffing tube in a non-automatic extension mode, to hold a follower (20) connected to the stuffing tube in a retracted position, and to maintain the casing hopper (46) in its position adjacent the casing filling station.

13. The machine of claim 12 wherein a natural casing (220) is placed on the stuffing tube (16) with the stuffing tube in a partially retracted position and with a discharge end being upstream of the casing filling station (27); the PLC (66) upon being actuated is adapted to cause the stuffing tube to extend through a chuck (29), and to cause a meat pump (14) to start pumping meat through the stuffing tube when the position of the stuffing tube through the chuck is sensed, and to start the rotation of the chuck and the stuffing tube, and to start the operation of linking chains (31) and a conveyor located downstream from the casing filling station; a sensor on the machine adjacent a twister mechanism (28) containing the chuck to detect the manual advancement of the follower in the proximity of the sensor to send a signal to the PLC to stop the operation of the casing filling station.

14. The machine of any one of claims 8 to 13, wherein the means for moving the casing hopper (46) includes means for slidably moving the casing hopper away from the casing filling station.

15. The machine of any one of claims 8 to 14 wherein the means for moving the casing hopper (46) includes means for pivoting the casing hopper 180° away from the casing filling station.

16. The machine of any one of claims 8 to 15 wherein a forward end of the stuffing tube extends through a hollow chuck (100), and a resilient brake element (160) in the chuck around the stuffing tube (16) to yieldingly engage the natural casing to impede the longitudinal movement of the natural casing on the stuffing tube.

## Patentansprüche

1. Verfahren, um ein wahlweises Befüllen einer künstlichen Hülle oder einer natürlichen, hohlen, länglichen Hülle mit einer Fleischemulsion in einer Vorrichtung zum Füllen der Emulsion in Hüllen zu ermöglichen, umfassend, dass entweder künstliche Hüllen (220) aus einem Magazin (46), das als Vorratsbehälter für künstliche Hüllen (220) dient und benachbart zu einer Station zum Befüllen von Hüllen ist, bereitgestellt werden oder eine natürliche Hülle (220) auf ein längliches Füllrohr (16) für Fleischemulsion mit einem Fleischemulsionsausgabeende platziert wird, ein verlängertes Ende der natürlichen Hülle über dem Ausgabeende des Füllrohrs verschlossen wird, so dass die Fleischemulsion, die aus dem Ausgabeende austritt, die natürliche Hülle (220) in Längsrichtung drückt, indem Fleischemulsion durch das Füllrohr (16) für einen ausdehnenden Ausstoß in die natürliche Hülle bei ausreichendem Volumen und Geschwindigkeit gepumpt wird, um die Hauptenergie innerhalb der natürlichen Hülle zur Verfügung zu stellen, um die natürliche Hülle vorwärts von dem Ausgabeende des Füllrohrs weg zu bewegen, eine Hüllenfüllstation (27) bereitgestellt wird, welche das Füllrohr umfasst, um die mit Fleischemulsion zu füllenden Hüllen zu unterstützen, ein Hüllenmagazin (46) bereit gestellt wird, das benachbart zur Hüllenfüllstation angeordnet ist, um als Vorratsbehälter für eine Mehrzahl elastischer künstlicher Hüllen zu dienen, um elastische, künstliche Hüllen zur Befestigung am Füllrohr (16) zu liefern, und das Hüllenmagazin von seiner Position, benachbart zu der Hüllenfüllstation entfernt wird, wenn natürliche Hüllen an einem Füllrohr in der Hüllenfüllstation platziert werden.

2. Verfahren nach Anspruch 1, wobei Wasser auf die natürliche Hülle (220) aufgebracht wird, bevor die Hülle auf dem Füllrohr (16) platziert wird, um die Hülle hydriert, weich, schälbar und rutschig zu machen, um zu verhindern, dass die Hülle an dem Füllrohr haftet.

3. Verfahren nach einem der Ansprüche 1 oder 2, wobei sich das vordere Ende des Füllrohrs durch eine hohle Spannvorrichtung (100) erstreckt, wobei ein nachgiebiges Brems-(160) Element in die Spannvorrichtung um das Füllrohr platziert wird, um die natürliche Hülle ausgiebig zu erfassen, um die longitudinale Bewegung der natürlichen Hülle auf dem Füllrohr (16) zu hindern.

4. Verfahren nach einem der Ansprüche 1 bis 3, wobei sich eine rotierbare Abbindeanordnung (30) dem Ausgabeende des Füllrohrs (16)nachgelagert befindet, um die natürliche Hülle, die mit Fleischemulsion gefüllt ist, abzubinden und um die longitudinale Bewegung der natürlichen Hülle von dem Füllrohr zu behindern.

5. Verfahren nach einem der Ansprüche 1 bis 4, wobei eine Fleischpumpe verwendet wird, um Fleischemulsion durch ein Füllrohr (16) zu pumpen, wobei das vordere Ende des Füllrohrs sich durch eine hohle Spannvorrichtung (100) erstreckt, ein nachgebendes Bremselement (160) in die Spannvorrichtung um das Füllrohr platziert wird, um die natürliche Hülle ausgiebig zu erfassen, damit die longitudinale Bewegung der natürlichen Hülle auf dem Füllrohr behindert wird, wobei eine rotierbare Abbindevorrichtung (30) dem Ausgabeende des Füllrohrs nachgelagert platziert ist, um die natürliche Hülle, die mit der Fleischemulsion gefüllt ist, abzubinden und die Längsbewegung der natürlichen Hülle von dem Füllrohr zu behindern.

6. Verfahren nach einem der Ansprüche 1 bis 5, wobei eine speicherprogrammierbare Steuerung (PLC) zur Verfügung gestellt wird und erfasst, wenn das Hüllenmagazin in seiner Position benachbart zu der Füllstation (27) ist, um daraufhin die longitudinale Bewegung des Füllrohrs (17) zu steuern, um das Füllrohr in einem nicht-automatischen Erweiterungsbetrieb zu halten, um einen Mitläufer (20), der mit dem Füllrohr verbunden ist, in einer eingefahrenen Position zu halten und um das Hüllenmagazin in seiner Position benachbart zu der Hüllenfüllstation zu halten.

7. Verfahren nach Anspruch 6, wobei eine natürliche Hülle auf einem Füllrohr (16) platziert ist, wobei das Füllrohr in einer teilweise eingefahrenen Position ist, um ein Ausgabeende des Füllrohrs der Hüllenfüllstation (27) vorgeschaltet anzuordnen; Betätigen der speicherprogrammierbaren Steuerung PLC (66), um zu bewirken, dass das Füllrohr sich durch die Spannvorrichtung (29) erstreckt und dass eine Fleischpumpe (14) beginnt, Fleisch durch das Füllrohr zu pumpen, wenn die Position des Füllrohrs in der Spannvorrichtung erkannt worden ist, und dass die Rotation der Spannvorrichtung und des Füllrohrs (16) beginnt, und dass der Betrieb der Abbindeketten (31) und eines Förderers, der der Hüllenfüllstation (27) nachplatziert ist, beginnt; manuelles Heranbringen des Mitläufers (20) und Erkennen seiner Ankunft an einer Position, die zu einem Drehmechanismus, der die Spannvorrichtung beinhaltet, benachbart ist, und Veranlassen, dass die speicherprogrammierbare Steuerung (PLC) (66) den Betrieb der Hüllenfüllstation beendet.

8. Vorrichtung (10), um Fleischemulsion in längliche, natürliche oder künstliche Hüllen zu füllen, umfassend eine Hüllenfüllstation (27) mit einem Füllrohr (16), um eine Hülle, die mit einer Fleischemulsion gefüllt werden soll, zu unterstützen, ein Hüllenmagazin (46), das als Reservoir für eine Vielzahl von elastischen, künstlichen Hüllen (220) dient, befestigt an der Vorrichtung, benachbart zu der Hüllenfüllstation, um die elastischen künstlichen Hüllen bereit zu stellen, um sie auf ein Füllrohr zu stecken, und Mittel an der Vorrichtung, um das Hüllenmagazin weg von der Hüllenfüllstation um eine vertikale Achse zu drehen, um das Füllen einer natürlichen Hülle (220) auf dem Füllrohr (16) zu erlauben.

9. Vorrichtung nach Anspruch 8, wobei die Mittel, um das Hüllenmagazin (46) zu bewegen, Mittel umfassen, um das Hüllenmagazin zu heben, das Hüllenmagazin zu schwenken und anschließend das Hüllenmagazin abzusenken, um das Hüllenmagazin von der Hüllenfüllstation zu entfernen.

10. Vorrichtung nach einem der Ansprüche 8 oder 9, wobei das Füllrohr (16) longitudinal beweglich an der Vorrichtung angebracht ist und Mittel dem Füllrohr zugeordnet sind, um eine Anpassung seiner longitudinalen Bewegung zu erlauben.

11. Vorrichtung nach einem der Ansprüche 8 bis 10, wobei die Anpassung der longitudinalen Bewegung des Füllrohrs einen entfernbaren festen Stop oder ein sensorbetätigtes pneumatisches Steuerungsmittel umfasst.

12. Vorrichtung nach einen der Ansprüche 8 bis 11, wobei zumindest ein Sensor in der Maschine platziert ist, um zu erfassen, wann das Hüllenmagazin sich in seiner Position benachbart zu der Hüllenfüllstation (27) befindet; der Sensor mit einer speicherprogrammierbaren Steuerung (PLC) (66) funktionell verbunden ist, um die longitudinale Bewegung des Füllrohrs (16) zu steuern und das Füllrohr in einem nicht automatischen, erweiterten Betriebszustand zu halten, um einen Mitläufer (20), der mit dem Füllrohr verbunden ist, in einer zurückgezogenen Stellung zu halten und um das Hüllenmagazin (46) in seiner Position benachbart zur Hüllenfüllstation zu belassen.

13. Vorrichtung nach Anspruch 12, wobei eine natürliche Hülle (220) auf dem Füllrohr (16) platziert ist, wobei das Füllrohr in einer teilweise zurückgezogenen Stellung ist und ein Ausgabeende der Hüllenfüllstation (27) vorgelagert ist; die speicherprogrammierbare Steuerung (PLC) (66), nachdem sie aktiviert wurde, geeignet ist zu bewirken, dass das Füllrohr sich durch eine Spannvorrichtung (29) erstreckt, und dass eine Fleischpumpe (14) beginnt, Fleisch durch das Füllrohr zu pumpen, wenn die Position des Füllrohrs in der Spannvorrichtung erkannt wird, und dass die Rotation der Spannvorrichtung und des Füllrohrs beginnt, und dass mit dem Betrieb der Abbindeketten (31) und eines Beförderungsmittels, das nachgeordnet der Hüllenfüllstation platziert ist, begonnen wird; ein Sensor an der Vorrichtung benachbart zu einem Drehmechanismus (28), der die Spannvorrichtung umfasst, um das manuelle Herannahen des Mitläufers im Nahbereich des Sensors zu erkennen, um ein Signal zu der speicherprogrammierbaren Steuerung (PLC) zu senden, den Betrieb der Hüllenfüllstation zu beenden.

14. Vorrichtung nach einem der Ansprüche 8 bis 13, wobei die Mittel, um das Hüllenmagazin (46) zu bewegen, Mittel umfassen, um gleitend das Hüllenmagazin weg von der Hüllenfüllstation zu bewegen.

15. Vorrichtung nach einem der Ansprüche 8 bis 14, wobei die Mittel, um das Hüllenmagazin (46) zu bewegen, Mittel umfassen, um das Hüllenmagazin um 180° weg von der Hüllenfüllstation zu schwenken.

16. Vorrichtung nach einem der Ansprüche 8 bis 15, wobei ein vorderes Ende des Füllrohrs sich durch die hohle Spannvorrichtung (100) erstreckt und ein elastisches Bremselement (160) in der Spannvorrichtung um das Füllrohr (16) vorgesehen ist, um die natürliche Hülle genügend zu erfassen, um die longitudinale Bewegung der natürlichen Hülle auf dem Füllrohr zu behindern.

## Revendications

1. Procédé pour permettre le remplissage sélectif d'un boyau artificiel ou d'un boyau naturel creux de grande longueur avec une émulsion de viande dans une machine pour le remplissage de ladite émulsion dans des boyaux, comprenant soit la fourniture de boyaux artificiels (220) depuis une trémie (46) servant de réservoir de boyaux artificiels (220), adjacente à un poste de remplissage des boyaux, soit la mise en place d'un boyau naturel (220) sur un tube long (16) d'embossage avec l'émulsion de viande ayant une extrémité de décharge de l'émulsion de viande, la fermeture d'une extrémité allongée du boyau naturel sur l'extrémité de décharge du tube d'embossage de telle sorte que l'émulsion de viande sortant de l'extrémité de décharge pousse le boyau naturel (220) longitudinalement par le pompage et l'envoi de l'émulsion de viande dans le tube d'embossage (16) pour une décharge avec expansion dans le boyau naturel avec un volume et une vitesse suffisants pour impartir l'énergie primaire à l'intérieur du boyau naturel pour déplacer le boyau naturel vers l'avant hors de l'extrémité de décharge du tube d'embossage, la fourniture d'un poste de remplissage (27) des boyaux, comportant le tube d'embossage pour supporter le boyau à remplir avec l'émulsion de viande, la fourniture d'une trémie (46) à boyaux de manière adjacente au poste de remplissage des boyaux pour servir de réservoir à une pluralité de boyaux artificiels plissés pour la fourniture de boyaux artificiels plissés pour leur montage sur le tube d'embossage (16), et l'éloignement de la trémie à boyaux de sa position adjacente au poste de remplissage des boyaux lorsque des boyaux naturels sont placés sur un tube d'embossage dans le poste de remplissage des boyaux.

2. Procédé selon la revendication 1, dans lequel de l'eau est appliquée au boyau naturel (220) avant sa mise en place sur le tube d'embossage (16) afin d'hydrater le boyau et le rendre souple, pliable et glissant pour empêcher l'adhérence du boyau au tube d'embossage.

3. Procédé selon la revendication 1 ou 2, dans lequel l'extrémité avant du tube d'embossage s'avance dans un mandrin creux (100), plaçant un élément de frein souple (160) dans le mandrin autour du tube d'embossage pour engager élastiquement le boyau naturel afin d'entraver le déplacement longitudinal du boyau naturel sur le tube d'embossage (16).

4. Procédé selon l'une quelconque des revendications 1 à 3, dans lequel une unité rotative (30) de transformation en chapelet de saucisses est située en aval de l'extrémité de décharge du tube d'embossage (16) pour transformer en chapelet de saucisses le boyau naturel rempli de l'émulsion de viande et pour entraver le déplacement longitudinal du boyau naturel du tube d'embossage.

5. Procédé selon l'une quelconque des revendications 1 à 4, dans lequel une pompe à viande est utilisée pour pomper l'émulsion de viande et l'envoyer dans un tube d'embossage (16), dans lequel l'extrémité avant du tube d'embossage s'avance dans un mandrin creux (100), plaçant un élément de frein souple (160) dans le mandrin autour du tube d'embossage pour engager élastiquement le boyau naturel afin d'entraver le déplacement longitudinal du boyau naturel sur le tube d'embossage, dans lequel une unité rotative (30) de transformation en chapelet de saucisses est située en aval de l'extrémité de décharge du tube d'embossage pour transformer en chapelet de saucisses le boyau naturel rempli de l'émulsion de viande et pour entraver le déplacement longitudinal du boyau naturel du tube d'embossage.

6. Procédé selon l'une quelconque des revendications 1 à 5, dans lequel une unité logique programmable PLC est prévue et détecte le moment où la trémie à boyaux est dans sa position adjacente au poste (27) de remplissage du boyau pour ainsi contrôler le déplacement longitudinal du tube d'embossage (16), pour maintenir le tube d'embossage dans un mode d'extension non automatique, pour retenir un suiveur (20) relié au tube d'embossage dans une position rétractée, et pour maintenir la trémie à boyaux dans sa position adjacente au poste de remplissage du boyau.

7. Procédé selon la revendication 6, dans lequel un boyau naturel est placé sur le tube d'embossage (16), le tube d'embossage étant dans une position partiellement rétractée pour positionner une extrémité de décharge du tube d'embossage en amont du poste (27) de remplissage du boyau ; la PLC (66) est activée pour faire s'avancer le tube d'embossage dans un mandrin (29), et pour amener une pompe (14) à viande à commencer d'aspirer de la viande par le tube d'embossage lorsque la position du tube d'embossage dans le mandrin est détectée, et pour démarrer la rotation du mandrin et du tube d'embossage (16), et pour lancer le fonctionnement de chaînes (31) de transformation en chapelet de saucisses et d'un transporteur situé en aval du poste (27) de remplissage du boyau ; le suiveur (20) est avancé manuellement et son arrivée dans une position adjacente à un mécanisme torsadeur contenant le mandrin est détectée, et l'on provoque l'arrêt par la PLC (66) du fonctionnement du poste de remplissage du boyau.

8. Machine (10) destinée au remplissage d'une émulsion de viande dans de longs boyaux naturels ou artificiels, comprenant un poste (27) pour le remplissage des boyaux comprenant un tube d'embossage (16) destiné à recevoir un boyau à remplir avec l'émulsion de viande, une trémie (46) à boyaux destinée à servir de réservoir à une pluralité de boyaux artificiels plissés (220) montés sur la machine de manière adjacente au poste de remplissage des boyaux pour la fourniture de boyaux artificiels plissés pour leur montage sur le tube d'embossage, et des moyens sur la machine pour faire tourner en l'écartant du poste de remplissage des boyaux la trémie à boyaux autour d'un axe vertical afin de permettre le remplissage d'un boyau naturel (220) sur le tube d'embossage (16).

9. Machine selon la revendication 8, dans laquelle les moyens pour déplacer la trémie (46) à boyaux comprennent des moyens pour soulever la trémie à boyaux, faire pivoter la trémie à boyaux, et de là abaisser la trémie à boyaux pour écarter la trémie à boyaux du poste de remplissage des boyaux.

10. Machine selon la revendication 8 ou 9, dans laquelle le tube d'embossage (16) est monté mobile longitudinalement sur la machine, et des moyens sont associés au tube d'embossage pour permettre le réglage de son déplacement longitudinal.

11. Machine selon l'une quelconque des revendications 8 à 10, dans laquelle le réglage du déplacement longitudinal du tube d'embossage comprend une butée amovible dure, ou un moyen de commande pneumatique actionné par un capteur.

12. Machine selon l'une quelconque des revendications 8 à 11, dans laquelle au moins un capteur est situé dans la machine pour détecter le moment où la trémie à boyaux est dans sa position adjacente au poste (27) de remplissage du boyau, le capteur étant relié opérationnellement à une PLC (66) pour contrôler le déplacement longitudinal du tube d'embossage (16) et pour maintenir le tube d'embossage dans un mode d'extension non automatique, pour retenir un suiveur (20) relié au tube d'embossage dans une position rétractée, et pour maintenir la trémie (46) à boyaux dans sa position adjacente au poste de remplissage du boyau.

13. Machine selon la revendication 12, dans laquelle un boyau naturel (220) est placé sur le tube d'embossage (16) avec le tube d'embossage dans une position partiellement rétractée et avec une extrémité de décharge située en amont du poste de remplissage (27) du boyau ; la PLC (66) ) lorsqu'elle est activée est apte à faire s'avancer le tube d'embossage dans un mandrin (29), et à amener une pompe (14) à viande à commencer d'aspirer de la viande par le tube d'embossage lorsque la position du tube d'embossage dans le mandrin est détectée, et à démarrer la rotation du mandrin et du tube d'embossage, et à lancer le fonctionnement de chaînes (31) de transformation en chapelet de saucisses et d'un transporteur situé en aval du poste de remplissage du boyau ; un suiveur (20) placé sur la machine dans une position adjacente à un mécanisme torsadeur (28) contenant le mandrin, pour détecter l'avancée manuelle du suiveur à proximité du capteur pour envoyer un signal à la PLC d'arrêter le fonctionnement du poste de remplissage du boyau.

14. Machine selon l'une quelconque des revendications 8 à 13, dans laquelle les moyens pour déplacer la trémie (46) à boyaux comprennent des moyens pour écarter de manière coulissante la trémie (46) à boyaux du poste de remplissage des boyaux.

15. Machine selon l'une quelconque des revendications 8 à 14, dans laquelle les moyens pour déplacer la trémie (46) à boyaux comprennent des moyens pour faire pivoter la trémie à boyaux de 180° en l'écartant du poste de remplissage des boyaux.

16. Machine selon l'une quelconque des revendications 8 à 15, dans laquelle l'extrémité avant du tube d'embossage s'avance dans un mandrin creux (100), et un élément de frein souple (160) dans le mandrin autour du tube d'embossage engage élastiquement le boyau naturel afin d'entraver le déplacement longitudinal du boyau naturel sur le tube d'embossage.
